# EUROPÄISCHE PATENTSCHRIFT

(11) **EP 1 900 440 B1**
(45) Veröffentlichungstag und Bekanntmachung des Hinweises auf die Patenterteilung: **19.12.2012**
(21) Anmeldenummer: 07115586.5
(22) Anmeldetag: 04.09.2007
(51) Int. Cl.: B05D 3/02, B05D 3/06, C09J 7/02

(54) **Verwendung eines Applikationsmittels bei der Beschichtung und Lackierung mit UV/IR-härtenden Lacken**
Use of an application means for coating and lacquering with UV/IR hardening paints
Utilisation d'un moyen d'application destiné au revêtement et au laquage à l'aide de laques durcissantes aux UV/IR

(30) Priorität: 23.04.2007 DE 102007019424; 14.09.2006 DE 102006043934
(43) Veröffentlichungstag der Anmeldung: 19.03.2008
(73) Patentinhaber: TESA SE, 20253 Hamburg (DE)
(72) Erfinder: Meier, Andreas, Dr., 22417 Hamburg (DE)

(56) Entgegenhaltungen:
- US-A- 3 130 078
- US-A- 5 178 913
- US-A- 5 468 533

## Beschreibung

Die Erfindung bezieht sich auf die Verwendung eines Applikationsmittels zur Beschichtung und Lackierung einer Oberfläche mit einem durch Ultraviolett-Strahlung und/oder Infrarot-Strahlung härtenden.

Bei der Verwendung von mit Ultraviolett-Strahlung (nachfolgend UV) und/oder Infrarot-Strahlung (nachfolgend IR) aushärtenden Lacken, zum Beispiel bei der Lackierung von Fahrzeugen oder -teilen in der Automobilindustrie, tritt das Problem auf, dass die Strahleneinbringung in rückwärtig zur Strahlungsquelle orientierte Flächen nicht ausreichend ist. Als ein Beispiel sind die sog. "Schattenbereiche" an Ecken und Kanten angegeben. In diesen dem Strahlengang abgewandten Flächen härten die Lacke nur langsam oder gar nicht aus. Das hat dazu geführt, dass derartige Lacke nicht kommerziell eingesetzt werden. Derartige Lacke sind beispielsweise aus der DE 198 18 735 A1 bekannt.

Die US 5,468,533 A beschreibt das Abheben von Fenster- und Türgummis am Auto vom zu lackierenden Untergrund, indem ein fester oder formstabiler Plastikstreifen, der sich in Maschinenrichtung an einer Kante eines Klebestreifens erstreckt, in den Bereich zwischen Gummilippe und Karosserie geschoben wird. Mit dem Kleber wird das Klebeband fixiert, und zwar wird hierzu der Klebestreifen über das Gummi geklebt. Damit lassen sich Bereiche unter Gummilippe gut lackieren.

Der Klebebandstreifen kann auf seiner der Strahlung zugewandten Seite metallisiert beziehungsweise verspiegelt sein, um während der Lackierung eintreffende Strahlung zu reflektieren allein zum Zweck, um ein Aufheizen des Streifens zu verhindern, damit dieser sich nicht plastisch verformt.

Der vorliegenden Erfindung liegt daher die Aufgabe zugrunde, eine Lösung zur Verfügung zu stellen, mit der die Einstrahlungsintensität in rückwärtig zur Einstrahlungsquelle liegenden Bereichen erhöht wird.

Diese Aufgabe wird durch die Verwendung eines Applikationsmittels mit den Merkmale des Patentanspruches 1 gelöst. Gegenstand der Unteransprüche sind dabei vorteilhafte Weiterbildungen der Erfindung.

Erfindungsgemäß ist erkannt worden, dass das Aushärten von Lacken in dem Strahlengang abgewandten Flächen dadurch optimiert werden kann, dass bei der Bestrahlung ein Applikationsmittel eingesetzt wird, dass die Strahlung jedenfalls teilweise in diese Bereiche reflektiert. Hierzu weist ein derartiges Applikationsmittel an seiner Außenseite mindestens partiell ein Strahlung reflektierendes Mittel auf. Durch das erfindungsgemäße Applikationsmittel wird somit eine Ablenkung der Strahlung in Schattenbereiche erreicht und dort die Intensität erhöht, so dass die Härtung beschleunigt stattfindet oder überhaupt initiiert wird.

Nach der Lackierung wird die zur Härtung des Lacks benötigte UV- und/oder IR-Strahlung durch die reflektierende Oberfläche des Applikationsmittels in Schattenbereiche an Ecken und Kanten des zu lackierenden Teiles gestreut. Ohne die reflektierte Strahlung würden diese, der Strahlungsquelle abgewandten Flächen gar nicht oder nur sehr langsam aushärten. Bei der Verwendung von dualen Lacksystemen, bei denen die Härtung sowohl durch UV-Licht (in der Regel die energieärmere UV A Strahlung) als auch Wärme oder IR-Strahlung initiiert wird, werden beide Wellenlängen - IR und UV - effektiv reflektiert und in die Schattenbereiche gestreut.

Je nach Orientierung der Außenseite des Applikationsmittels kann dieses beim Beschichten und Lackieren neben der Funktion der Strahlungsreflektion eine weitere Funktion erfüllen:
Bei dem eigentlichen Lackiervorgang bleibt die der zu lackierenden Oberfläche zugewandte Unterseite des Applikationsmittels unbeschichtet, weil sie im Schatten des Sprühnebels angeordnet ist. Des Weiteren werden durch die Ausbildung einer zu der zu lackierenden Oberfläche angeordneten Kante so genannte "weiche Übergänge" in der Lackierung erzeugt. Der Farbnebel - in der Regel handelt es sich hier um einen Clear Coat, also einen Klarlack bzw. Schutzlack, - bildet auf dem Untergrund keine scharfe Kante, wie z.B. an der scharfen Kante eines Abdeckklebebandes, sondern nimmt beispielsweise aufgrund einer Wölbung des Applikationsmittels zur Verklebung hin kontinuierlich ab. Aufgrund des weichen, kontinuierlichen Übergangs nimmt das menschliche Auge nach Trocknung keine Kante oder Übergang zwischen frisch lackierter und unlackierter Fläche wahr. In diesem Verfahrensschritt übernimmt das Applikationsmittel die Funktion der handelüblichen Produkte mit der Bezeichnung "soft tapes" von der Firma 3M, "easy foams" von der Firma tesa, der Produkte "4330, 4302, 4304, 4305, 4309, 4316, 4317, 4318" der Firma tesa oder des in der deutschen Patentanmeldung DE-A 10 2005 030 749 beschriebenen Klebebandschlauches.

Das Applikationsmittel kann aus handelsüblichem Schaumstoff, insbesondere Polypropylen - PP, Polyethylen - PE, Polystyrol - PS, Polyester sowie Co-Polymeren, bestehen und massiv oder hohl sein. Als Material können aber auch Papier-, Gewebe- oder ungeschäumte Kunststoffschläuche - hohl oder massiv - eingesetzt werden.

In bevorzugter Ausgestaltung wird die Außenseite der Applikationshilfe mit einem Metall beschichtet, insbesondere bedampft, das für die jeweilige für die Aushärtung verwendete Strahlung einen hohen Reflektionsgrad besitzt. Als Metalle eignen sich insbesondere Aluminium für den sichtbaren und UV Anteil des Spektrums sowie Gold für den IR Anteil des Spektrums.

Während des Lackiervorgangs sollte das reflektierende Material des Applikationsmittels vor dem Lack geschützt sein, damit die Reflektivität nicht durch einen Lackauftrag vermindert wird. Um dies zu gewährleisten sind neben kreisförmigen und elliptischen Querschnitten jede beliebigen Querschnitte der Applikationsvorrichtung denkbar, bei denen das reflektierende Material in einem Bereich angeordnet ist, der zum einen während des Lackierschrittes nicht oder nur gering im Sprühnebel/Strahlengang liegt und zum anderen als Reflektionsfläche in Richtung der zu behandelnden Schattenbereich auf den zu lackierenden Oberflächen gewandt ist.

Alternativ kann jedoch auch vorgesehen sein, dass das reflektierende Material beim Lackiervorgang mit einer Schutzfolie abgedeckt ist. Unter dem Begriff der Schutzfolie wird dabei jede temporäre, also lösbare Abdeckung verstanden, die dazu dient, das reflektierende Material vor Lackauftrag zu schützen. Insbesondere eignet sich dazu eine Polymerfolie oder ein Papiervlies. Nach dem Lackiervorgang und vor dem Aushärten durch Strahlung wird die Schutzfolie dann abgezogen, so dass das reflektierende Material freiliegt und die Strahlung in die gewünschte Richtung reflektiert.

Die Schutzfolie kann einstückig auf das reflektierende Material aufgebracht sein oder es können mehrere nebeneinander oder hintereinander angeordnete Teilstücke der Schutzfolie vorgesehen sein. Die Verwendung von Teilstücken bietet sich insbesondere für große Flächen an. Beim Ablösen der Schutzfolie, also der jeweiligen Teilstücke, nach dem Lackiervorgang kann so besser gewährleistet werden, dass möglichst kein Lack von der Schutzfolie abblättert und die frische Lackierung auf der zu lackierenden Oberfläche verunreinigt.

Um ein Abblättern des Lacks zu verhindern, sollte die Schutzfolie zudem eine hohe Lackaffinität aufweisen, also den eingesetzten Lack auch ohne vorheriges Aushärten desselben besonders gut binden.

In bevorzugter Ausgestaltung ist die Schutzfolie bzw. sind die Teilstücke der Schutzfolie mittels eines Klebemittels lösbar auf dem reflektierenden Mittel angeordnet. Bei dem Klebemittel kann es sich beispielsweise um eine Acrylat-, eine Polyisobuten-, eine Ethyl-Vinyl-Acetat- oder eine Naturkautschuk-Klebemasse handeln. Bei dem Klebemittel handelt es sich in weiter bevorzugter Ausgestaltung um eine Klebeschicht, da diese besonders einfach zusammen mit der Schutzschicht auf die reflektierende Schicht aufbringbar ist. Ferner ist es bevorzugt, dass die Schutzfolie schwächer an dem reflektierenden Material haftet als das Applikationsmittel selbst an der zu lackierenden Oberfläche. Dadurch wird gewährleistet, dass die Schutzfolie leicht von dem reflektierenden Material ablösbar ist, ohne dass beim Ablösen die Festlegung des Applikationsmittels auf der zu lackierenden Oberfläche beeinträchtigt wird. Realisiert wird diese Anforderung durch die Auswahl entsprechend unterschiedlicher Klebemittel für die Schutzfolie und für das Applikationsmittel.

Besonders vorteilhaft lassen sich die Applikationsmittel im Lackierbereich (Inline Repair (OEM - Original Equipment Manufacturer), Finish (OEM) und Reparaturwerkstätten (ART)) anwenden. Durch die Formgebung halten sie den Übergang von lackierten zu unlackierten Flächen diffus und machen den Übergang unsichtbar. Hierbei handelt es sich in erster Linie um teillackierte Teile. Ferner ist bei Repararturlackierungen oder Nachlackierungen, insbesondere von einzelnen Teilen oder Teilbereichen, häufig ein Ofendurchgang mit entsprechend hohen Temperaturen zur Aushärtung der Lacke nicht wünschenswert, da andere Bauteile, wie z.B. Gummidichtungen oder ähnliches, den hohen Temperaturen nicht standhalten können. Bei derartigen Anwendungen gewinnt insofern die Aushärtung durch UV- und/oder IR-Strahlung an Bedeutung, bei der üblicherweise lediglich Temperaturen von etwa 90° C erreicht werden.

Zur Festlegung des Applikationsmittels ist vorzugsweise in seiner Längsrichtung eine reversible Klebemasse vorgesehen. Diese kann streifenförmig aufgetragen sein. Hier eignen sich Naturkautschuk-, Acrylat-, SIS- (Styrol-Isopren-Styrol), Silikon-, Butyl-, Ethyl-Vinyl-Acetat-Klebemassen und deren Harzabmischungen.

In einer weiter bevorzugten Ausführungsform der Erfindung ist das Applikationsmittel als Klebebandschlauch ausgebildet. Der Klebebandschlauch hat ein Trägermaterial, das eine zumindest partielle Klebebeschichtung aufweist, wobei das Klebeband in Richtung seiner Längsachse mit der Masseseite nach außen weisend zusammengerollt und die beiden Längskanten überlappend zusammengeklebt sind. Erfindungsgemäß ist der Klebebandschlauch zumindest partiell im Bereich der direkt bestrahlten Seite mit dem reflektieren Material ausgerüstet. Weitere Merkmale diese Klebebandschlauches sind in der deutschen Patentanmeldung DE-A 10 2005 030 749 beschrieben und werden zum Gegenstand dieser Anmeldung gemacht.

In einer weiteren vorteilhaften Weiterbildung des Klebebandschlauches ist die Klebemasse des Klebebandschlauchs in Längsrichtung in Form von zumindest einem Streifen oder Abschnitt nicht-klebend ausgerüstet. Dabei kann der oder die nichtklebenden Streifen oder Abschnitte durch Inaktivierung der Klebemasse und/oder durch Eindecken mit einem Abdeckmaterial erzeugt sein. Es werden vorteilhaft Beschichtungen eingesetzt, die einen möglichst großen Anteil der einfallenden Strahlung reflektieren sollen. Es eignen sich insbesondere Beschichtungen aus Metall wie Aluminium oder Gold in Form von Folien oder Lacken. Diese Beschichtungen können dabei gleichzeitig die Abdeckung und somit Inaktivierung der Klebemasse des Klebebandschlauchs bilden.

Die Inaktivierung der Klebemasse kann durch alle dem Fachmann bekannten Methoden wie Bestrahlen, Besprühen, Bedrucken, Bepudern oder Abdeckung erfolgen.

Ferner lässt sich ein in vorteilhafter Weise partiell abgedeckter Klebebandschlauch gemäß Unteranspruch 12 besser verarbeiten als ein über den ganzen Umfang klebender Schlauch oder Vollprofil.

Die Vorteile des Klebebandschlauchs gegenüber Schäumen sind darin zu sehen, dass sie bis etwa 160°C temperaturstabil sind, die Maskierung beispielsweise vor einem Ofendurchgang nicht abgezogen werden braucht. Die Klebebandschläuche lassen sich auch nach Ofendurchgang einfach und rückstandsfrei entfernen. Schäume hingegen sind in der Regel weniger temperaturstabil, eignen sich dafür aber insbesondere für den Einsatz bei UV-B und UV-C-Strahlung. Sowohl schaumbasierte Applikationsmittel als auch Klebebandschläuche sind gleichermaßen für den Einsatz bei der Dualaushärtung, also mit UV- und IR-Strahlung gleichermaßen, geeignet. Bei der Dualaushärtung werden üblicherweise Temperaturen bis etwa 90°C erreicht.

Klebebandschläuche weisen eine wesentlich geringere Dehnung auf und sind in Abrollrichtung unflexibel. Damit lassen sich lange und gerade Kanten (zum Beispiel im Dachbereich) wesentlich leichter bekleben als mit hochflexiblen Schäumen.

Die vorgenannten Klebeschläuche lassen sich beispielsweise mit Hilfe einer Vorrichtung, wie in der deutschen Patentanmeldung DE-A-10 2005 034 950 beschrieben, herstellen und applizieren.

Im Folgenden soll die Erfindung anhand mehrerer Ausführungsbeispiele gemäß den Figuren 1 bis 6 näher erläutert werden, ohne damit die Erfindung zu beschränken. Es zeigt
- Figur 1: ein Applikationsmittel in Form eines Klebebandschlauches,
- Figur 2: ein Applikationsmittel in Form eines hohlen Rundprofils,
- Figur 3: ein Applikationsmittel in Form eines massiven Rundprofils,
- Figur 4: ein Applikationsmittel in Form eines Birnenprofils,
- Figur 5: ein Applikationsmittel in Form eines Hohlprofils mit trapezförmigem Querschnitt,
- Figur 6: ein Applikationsmittel in Form eines Hohlprofils mit im wesentlichen trapezförmigem Querschnitt,
- Figur 7: einen Versuchsaufbau zur Bestimmung der Wirksamkeit eines erfindungsgemäßen Applikationsmittels.

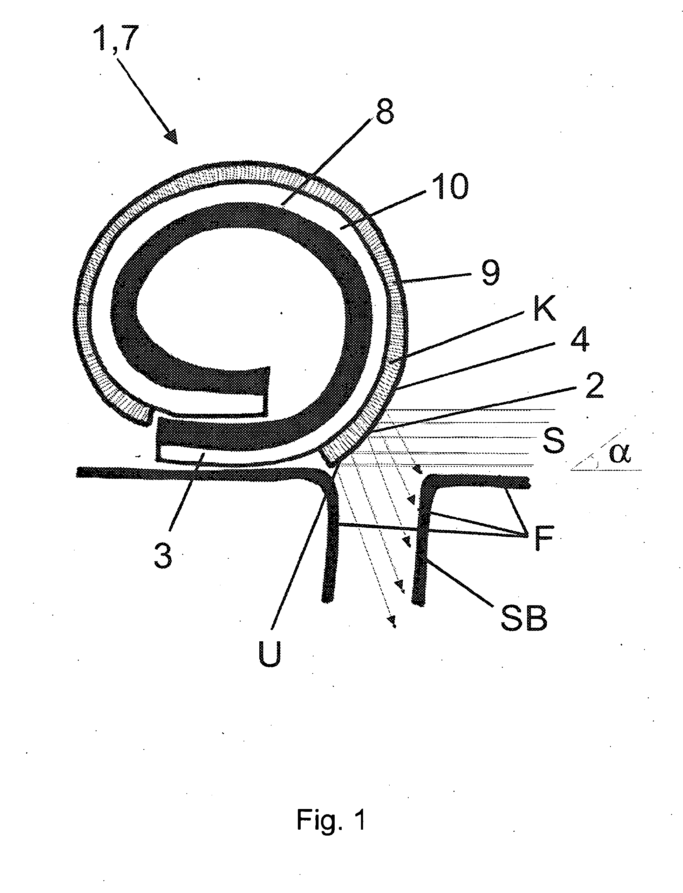

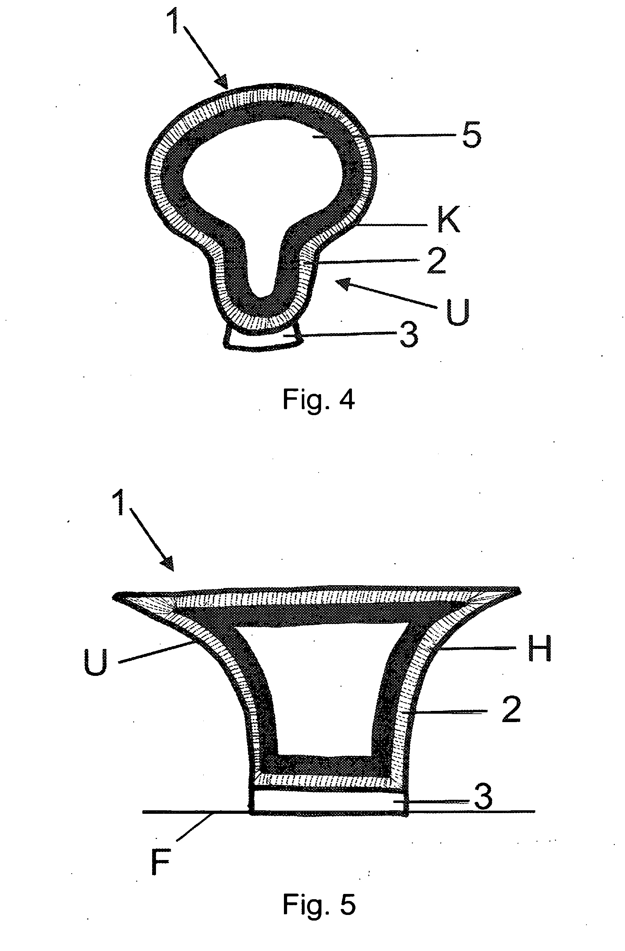

In den Figuren 1 bis 6 sind verschiedene Ausführungsformen eines Applikationsmittels 1 für Beschichtung und Lackierung von Oberflächen F mit Lacken dargestellt, die mittels UV- und/oder IR-Strahlung aushärtbar sind. Die Außenseite des Applikationsmittels 1 weist im Bereich einer zu lackierenden Oberfläche F mindestens partiell einen Strahlung S reflektierenden Abschnitt 2 auf. Das Applikationsmittel 1 wird vor dem Lackierungsvorgang in der Nähe der Kante reversibel festgelegt, beispielsweise mittels einer Klebemasse 3 in Form eines Klebebandes oder -abschnittes. Geeignete Klebemassen 3 sind beispielsweise Naturkautschuk-, Acrylat-, SIS- (Styrol-Isopren-Styrol), Silikon-, Butyl-, Ethyl-Vinyl-Acetat- Klebemassen und deren Harzabmischungen. Die in der Patentanmeldung DE-A-10 2005 030 749 beschriebenen Klebemassen eignen sich besonders gut, wobei eine rückstands- bzw. reißfreie Entfernung nach dem Lackieren und Aushärten gewährleistet sein sollte.

Bei den dargestellten Applikationsmittel 1 handelt es sich um ein Abdeckprodukt/-band, welches bei Reparatur-, Mehrfarben- oder Designlackierungen verwendet wird. Durch eine Krümmung K der Außenseite des Applikationsmittels 1, siehe Ausführungsbeispiele gemäß Figuren 1 bis 4, oder einen Hinterschnitt H, siehe Ausführungsbeispiele 5 und 6, entsteht beim Lackiervorgang erstens auf der der Oberfläche F zugewandte Unterseite U des Applikationsmittels 1 eine unbehandelte Freizone und zweitens ein unscharfer Übergang vom übersprühten und damit lackierten Bereich zum nicht-übersprühten und damit unlackierten Bereich auf der Oberfläche F. Ein diffuser Lackübergang ist charakteristisch. Bei Reparaturlackierungen und Nachlackierungen wird die Reparaturzone so nicht randscharf abgedeckt. Aufgrund des weichen, kontinuierlichen Übergangs nimmt das menschliche Auge nach Trocknung keine Kante oder Übergang zwischen frisch lackierter und unlackierter Fläche wahr.

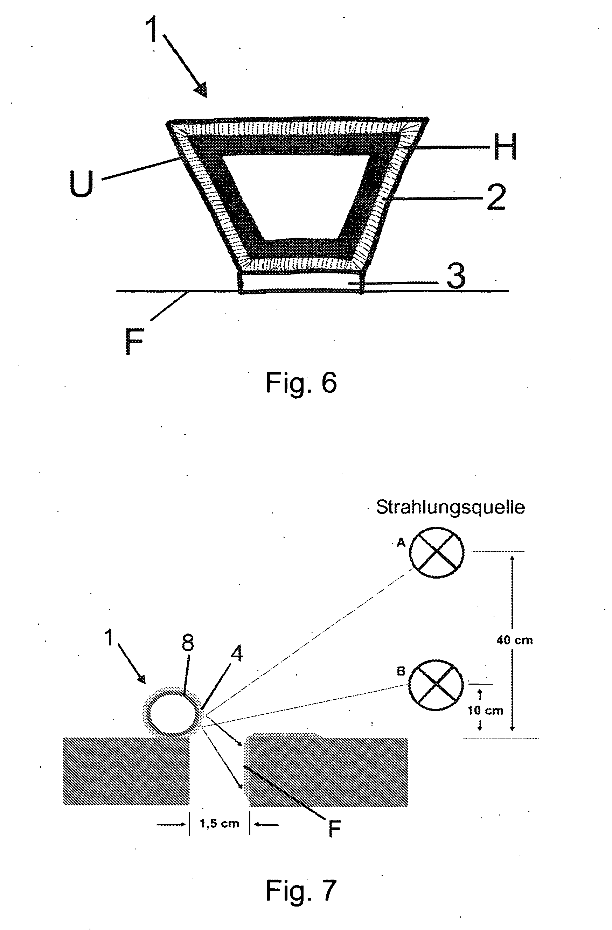

Der Querschnitt des Applikationsmittel 1 ist je nach Verwendungszweck unterschiedlich, wobei abhängig von der Anordnung und Fläche des Schattenbereiches SB eine optimale Kontur gewählt wird. Ziel ist es, diesen Bereich SB optimal auszuleuchten und eine hohe aber gleichmäßige Strahleneinbringung S zu erzielen. In den Figuren 1 bis 5 sind eine nach außen bzw. innen gewölbte Außenseite und in Figur 6 eine in Richtung der Auflagefläche auf dem zu lackierenden Oberfläche F geneigte ebene Außenseite der Applikationshilfe 1 gezeigt, wobei die Außenseite und die Oberfläche F des zu lackierenden Objektes einen Winkel α kleiner 90° bilden.

Im Bereich des Hinterschnittes H ist die Außenseite des Applikationsmittels 1 mit einem Metall, vorzugsweise Aluminium oder Gold, bedampft. Das jeweilige Metall sollte je nach verwendetem Lack einen möglichst hohen Reflektionsgrad für den sichtbaren, den UV-Anteil und/oder den IR-Anteil des Spektrums besitzen. Alternativ ist eine Metallfolie 4, insbesondere eine Aluminiumfolie oder eine Goldfolie, vorgesehen, die entweder als nicht-klebendes Abdeckmaterial, das den außen klebenden Schlauch, oder als klebendes Abdeckmaterial, ein Profil wie Schaumstoff (PP, PE, PS, Polyester sowie Co-Polymere) partiell abdeckt, ausgeführt ist. Der Folienträger kann aus Polyestern, PP oder einem CoPolymer bestehen, auf den die Metallschicht 4 aufgedampft oder die mit einer dünnen Metallschicht 4 laminiert ist. Alternativ kann auch ein Papierträger eingesetzt werden, der mit einer Metallschicht 4 bedampft oder einer dünnen Metallschicht 4 laminiert ist. Letztlich kann auch direkt eine dünne Metallfolie 4 eingesetzt werden. Der reflektierende Bereich 2 ist in der Freizone angeordnet, wo keine Abdeckung während des Lackiervorganges erfolgt.

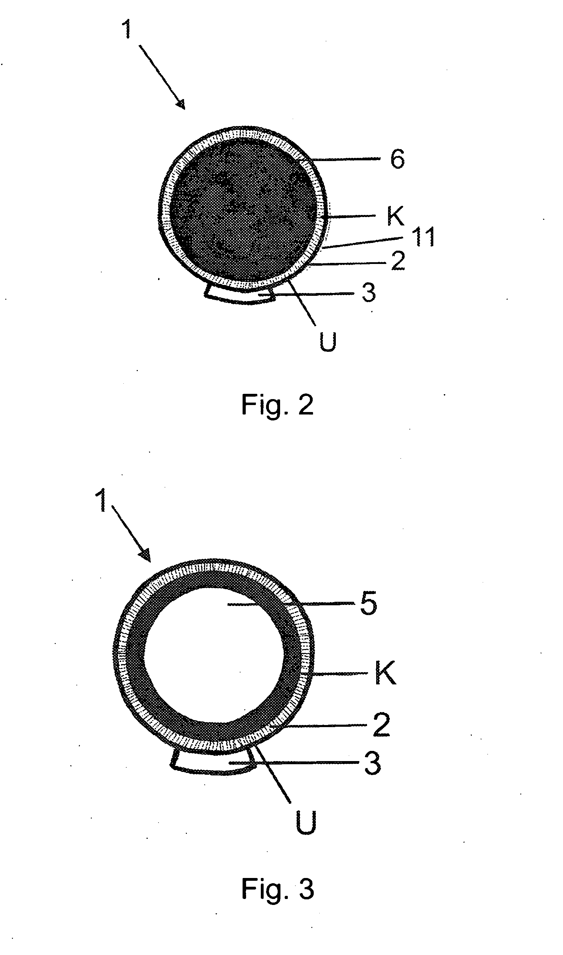

Fig. 2 zeigt eine Ausgestaltung eines Applikationsmittels 1, bei dem die Metallschicht 4 bereichsweise, hier nämlich im reflektierenden Abschnitt 2, mit einer Schutzfolie 11 abgedeckt ist. Die Schutzfolie 11 ist als selbstklebende Folie ausgebildet und kann nach dem Lackiervorgang wieder abgezogen werden. Durch die Schutzfolie 11 ist sichergestellt, dass die Metallschicht 4 auch bei beliebigen Geometrien des Applikationsmittels 1 und bei beliebigen Sprührichtungen während der Lackierung lackfrei bleibt, so dass die Reflektivität nicht durch einen Lackauftrag vermindert wird.

Nach Beendigung des eigentlichen Lackiervorganges wird zur Härtung der Lackschicht auf der Oberfläche F UV-Strahlung S eingebracht. An der Oberfläche des Applikationsmittel 1 wird die UV-Strahlung S reflektiert und insbesondere durch die Ausrüstung mit einem reflektierenden Material 4 im Bereich des Hinterschnittes H in Richtung von Schattenbereichen SB an Kanten und Ecken abgelenkt. Ohne diese Retro-Reflektion würden diese, der Strahlungsquelle abgewandten Flächen gar nicht oder nur sehr langsam aushärten.

Es kann auch IR-Strahlung alleine oder in Kombination mit UV-Strahlung zur Härtung eingesetzt werden. Bei der Verwendung von dualen Lacksystemen, bei denen die Härtung sowohl durch UV-Strahlung, aus Gründen der Arbeitssicherheit vorzugsweise mit der energieärmere UV-A Strahlung, als auch durch IR-Strahlung initiiert wird, werden die Wellen beide Wellenlängen - IR und UV - effektiv reflektiert und in die Schattenbereiche SB gestreut.

Das Applikationsmittel 1 ist als Hohlprofil 5 oder Vollprofil 6 ausgeführt oder kann von einem Klebeband zu dem in Figur 1 dargestellten Klebebandschlauch 7 gebildet sein. Eine nicht-massive Gestaltung führt zu einem Vorteil bei der Anwendung, weil durch die erhöhte Flexibilität Kurven nachgebildet werden können.

In Figur 1 ist ein Applikationsmittel 1 in Form eines Klebebandschlauches 7 dargestellt. Ein derartiger Klebebandschlauch 1 weist im wesentlichen einen ähnlichen Aufbau, wie in der deutschen Patentanmeldung DE-A-10 2005 030 749 beschrieben ist, auf, jedoch ist abschnittsweise auf der der zu lackierenden Oberfläche F zugewandten Außenseite reflektierendes Material 4 vorgesehen. Weitere zentrale Elemente des Klebebandschlauches 7 gemäß Figur 1 sind die Klebmasse 10 des Klebebandes sowie das Trägermaterial 8 des Klebebandes. Das Klebeband ist in Richtung der Längsachse mit der Masseseite nach außen weisend zusammengerollt, und die beiden Längskanten des Klebebands sind überlappend zusammengeklebt, so dass sich ein Überlappungsbereich ergibt. Der Überlappungsbereich sollte bezogen auf die Breite des Klebebands üblicherweise etwa 5 % bis etwa 60 %, vorzugsweise etwa 20 %, betragen. Zusätzlich kann auf die Klebemasse 10 des Klebebandes ein Abdeckmaterial 9 kaschiert sein. In diesem Fall beträgt die Breite des abgedeckten Bereichs annähernd 50 % des äußeren Umfangs des Klebebandschlauchs 1, wobei hier die reflektierende Beschichtung 4 in der Nähe des Überlappungsbereiches angeordnet ist.

Fig. 7 zeigt einen Versuchsaufbau auf dem die Wirksamkeit eines erfindungsgemäßen Applikationsmittels 1 getestet wurde. Als Applikationsmittel 1 wurde bei den Versuchen ein Klebebandschlauch gemäß Fig. 1 mit und ohne reflektierende Beschichtung 4 verwendet. Die Belichtung erfolgte jeweils mit einer 60 W Niederdruck Quecksilberdampflampe als Strahlungsquelle für jeweils 120 s. Dabei war die Strahlenquelle in einem Fall A in einem Abstand von 10 cm zur Oberfläche und in einem Fall B in einem Abstand von 40 cm zur Oberfläche angeordnet. Die Strahlungsintensität im Schattenbereich, also in dem Spalt zwischen den beiden Blöcken, wurde durch eine Verfärbung von UV-Streifen (UV Strip der Firma tesa; Abmessungen 18mm x ca. 60mm) mit einer Hönle-Auswerteeinheit UV Scan quantitativ bestimmt. Die Ergebnisse sind in der folgenden Tabelle dargestellt, wobei die ersten beiden Spalten die am jeweiligen Ort eingestrahlte Energie angibt, während in der dritten Spalte die prozentuale Veränderung angegeben ist:

**Tab 1: Ergebnisse der quantitativen Auswertung der Farbtönung der tesa UV stripes mit dem Hönle UV scan nach den Belichtungsversuchen mit unterschiedlichen Anordnungen.**

| | **gap** | **top** | **gap** |
|---|---|---|---|
| | *mJ*/*cm²* | *mJ*/*cm²* | *%* |
| A: blank | 1 | 24 | 4 |
| A: reflecting tube | 4 | 21 | 19 |
| B: blank | 1 | 13 | 8 |
| B: reflecting tube | 5 | 13 | 38 |

Aus den Ergebnissen wird deutlich, dass durch Verwendung eines Applikationsmittels 1 mit einem reflektierenden Material die Strahlungsintensität in Schattenbereichen SB deutlich erhöht werden kann. Eine derartige Erhöhung der Strahlungsintensität ermöglicht die Verwendung von mit IR- und/oder UV-Strahlung aushärtbaren Lacken. Derartige Lacke wurden bisher wegen des komplizierten Aushärtens in Schattenbereichen nicht oder nur in Einzellfälle verwendet.

### Bezugszeichen

- 1: Applikationsmittel
- 2: reflektierender Abschnitt
- 3: Klebemasse
- 4: Reflektierendes Material
- 5: Hohlprofil
- 6: Vollprofil
- 7: Klebebandschlauch
- 8: Träger
- 9: Abdeckmaterial
- 10: Klebemasse
- 11: Schutzfolie

- F: zu lackierende Oberfläche
- S: Strahlung
- SB: Schattenbereich
- K: Krümmung
- H: Hinterschnitt
- U: Unterseite

## Patentansprüche

1. Verwendung eines Applikationsmittels (1) zum Maskieren des Untergrunds während eines Lackierprozesses und zur anschließende Härtung des Lackes mittels UV und/oder IR-Strahlung in dem Strahlengang abgewandten Flächen, wobei das Applikationsmittel (1) lösbar auf der zu lackierenden Oberfläche (F) festlegbar ist und an der Außenseite des Applikationsmittels (1) mindestens partiell ein Strahlung reflektierendes Mittel (4) vorgesehen ist, das eine Reflexion der Strahlung in Schattenbereiche erreicht, so dass dort die Härtung des Lackes beschleunigt oder initiiert wird.

2. Verwendung nach Anspruch 1, **dadurch gekennzeichnet,**
**dass** ein Klebeband mit einem Trägermaterial (8) vorgesehen ist, das eine zumindest partielle Klebebeschichtung (10) aufweist,
**dass** das Klebeband in Richtung der Längsachse mit der Masseseite nach außen weisend zusammengerollt und die beiden Längskanten überlappend zusammengeklebt sind und so ein Klebebandschlauch (7) als Applikationsmittel (1) gebildet ist und
**dass** an der Außenseite des Klebebandschlauchs (7) mindestens partiell das Strahlung reflektierende Mittel (4) vorgesehen ist.

3. Verwendung nach Anspruch 2, **dadurch gekennzeichnet,**
**dass** die beiden Längskanten des Klebebandes derart überlappend zusammengeklebt sind, dass bezogen auf die Breite des Klebebandes ein Bereich von etwa 5 % bis etwa 60 % überlappt.

4. Verwendung nach einem der vorhergehenden Ansprüche, **dadurch gekennzeichnet,**
**dass** das reflektierende Mittel (4) eine Metalloberfläche ist und/oder dass das reflektierende Mittel (4) auf die Oberfläche eines Profils oder Schlauches aufgedampft ist.

5. Verwendung nach Anspruch 4, **dadurch gekennzeichnet,**
**dass** das reflektierende Mittel (4) eine Aluminiumoberfläche oder eine Goldoberfläche ist.

6. Verwendung nach einem der vorhergehenden Ansprüche, **dadurch gekennzeichnet, dass** das reflektierende Mittel (4) in Form eines Klebebandes oder einer Klebefolie auf die Oberfläche eines Profils oder Schlauches aufgebracht ist, und/oder dass das reflektierende Mittel (4) temporär mit einer Schutzfolie (11) abgedeckt ist und dass die Schutzfolie (11) lösbar auf dem reflektierenden Mittel (4) angeordnet ist.

7. Verwendung nach Anspruch 6, **dadurch gekennzeichnet,**
**dass** die Schutzfolie (11) eine hohe Lackaffinität aufweist und/oder dass die Schutzfolie (11) mittels eines Klebemittels lösbar auf dem reflektierenden Mittel (4) angeordnet ist.

8. Verwendung nach Anspruch 7, **dadurch gekennzeichnet,**
**dass** die Schutzfolie (11) mittels einer Klebeschicht lösbar auf dem reflektierenden Mittel (4) angeordnet ist.

9. Verwendung nach einem der vorhergehenden Ansprüche, **dadurch gekennzeichnet,**
**dass** das Applikationsmittel (1) ein Klebemittel (3), vorzugsweise in Form einer Klebeschicht, aufweist, mittels dessen es auf der zu lackierenden Oberfläche (4) festlegbar ist, vorzugsweise, dass in Längsrichtung des Applikationsmittels (1) ein oder mehrere Streifen vorgesehen sind, die nicht mit Kleber beschichtet sind.

10. Verwendung nach einem der vorhergehenden Ansprüche, **dadurch gekennzeichnet,**
**dass** ein nicht-klebender Streifen oder Abschnitt durch Inaktivierung einer Klebemasse und/oder durch Eindecken mit einem Abdeckmaterial erzeugt ist.

11. Verwendung nach einem der vorangehenden Ansprüche, **dadurch gekennzeichnet,**
**dass** der Querschnitt des Applikationsmittels (1) so gestaltet ist, dass bei Anordnung desselben auf der zu lackierenden Oberfläche (F) zwischen dieser Oberfläche und der Außenseite des Applikationsmittels (1) als Unterseite (U) ein Freiraum verbleibt.

12. Verwendung nach Anspruch 11, **dadurch gekennzeichnet, dass** die Unterseite (U) nach außen oder innen gewölbt ist oder dass die Unterseite (U) von einer ebenen Fläche gebildet ist.

13. Verwendung nach einem der vorhergehenden Ansprüche, **dadurch gekennzeichnet,**
**dass** der Querschnitt des Applikationsmittels (1) kreisförmig, keilförmig oder elliptisch ist und/oder dass der Querschnitt des Applikationsmittels (1) von einem Parallelogramm, vorzugsweise einem gleichschenkligen Trapez oder Rhombus, gebildet wird.

## Claims

1. Use of an application means (1) for masking the substrate during a painting process and for subsequently hardening the paint by means of UV and/or IR radiation in surface areas facing away from the beam, wherein the application means (1) can be detachably fixed on the surface (F) to be painted and a radiation-reflecting means (4) is at least partially provided on the outer side of the application means (1), achieving a reflection of the radiation in shadow regions, so that the hardening of the paint is speeded up or initiated there.

2. Use according to Claim 1, **characterized in that** an adhesive tape is provided with a backing material (8), which has an at least partial adhesive coating (10), **in that** the adhesive tape is rolled together in the direction of the longitudinal axis with the compound side facing outwards and the two longitudinal edges are stuck together in an overlapping manner and in this way an adhesive tape tube (7) is formed as the application means (1), and **in that** the radiation-reflecting means (4) is at least partially provided on the outer side of the adhesive tape tube (7).

3. Use according to Claim 2, **characterized in that** the two longitudinal edges of the adhesive tape are stuck together in an overlapping manner in such a way that, with respect to the width of the adhesive tape, a region of about 5% to about 60% overlaps.

4. Use according to one of the preceding claims, **characterized in that** the reflecting means (4) is a metal surface and/or **in that** the reflecting means (4) is vapour-deposited on the surface of a profile or tube.

5. Use according to Claim 4, **characterized in that** the reflecting means (4) is an aluminium surface or a gold surface.

6. Use according to one of the preceding claims, **characterized in that** the reflecting means (4) is applied in the form of an adhesive tape or an adhesive film to the surface of a profile or tube, and/or **in that** the reflecting means (4) is temporarily covered with a protective film (11) and **in that** the protective film (11) is arranged detachably on the reflecting means (4).

7. Use according to Claim 6, **characterized in that** the protective film (11) has a high affinity to paint and/or **in that** the protective film (11) is arranged detachably on the reflecting means (4) by means of an adhesive means.

8. Use according to Claim 7, **characterized in that** the protective film (11) is arranged detachably on the reflecting means (4) by means of adhesive layer.

9. Use according to one of the preceding claims, **characterized in that** the application means (1) comprises an adhesive means (3), preferably in the form of an adhesive layer, by means of which it can be fixed on the surface (F) to be painted, preferably **in that** one or more strips that are not coated with adhesive are provided in the longitudinal direction of the application means (1) .

10. Use according to one of the preceding claims, **characterized in that** a non-adhering strip or portion is created by deactivating an adhesive compound and/or by masking with a covering material.

11. Use according to one of the preceding claims, **characterized in that** the cross section of the application means (1) is formed such that, when the same is arranged on the surface (F) to be painted, a clearance remains between this surface and the outer side of the application means (1) as the underside (U).

12. Use according to Claim 11, **characterized in that** the underside (U) is outwardly or inwardly curved or **in that** the underside (U) is formed by a planar surface.

13. Use according to one of the preceding claims, **characterized in that** the cross section of the application means (1) is circular, wedge-shaped or elliptical and/or **in that** the cross section of the application means (1) is formed by a parallelogram, preferably an isosceles trapezoid or rhombus.

## Revendications

1. Utilisation d'un moyen d'application (1) pour masquer le soubassement pendant une opération de vernissage et pour ensuite durcir le vernis par rayonnement UV et/ou rayonnement IR sur les surfaces non tournées vers la trajectoire des rayons, dans lequel
le moyen d'application (1) peut être fixé de manière libérable sur la surface (F) à vernir et
un moyen (4) qui réfléchit au moins partiellement le rayonnement et qui permet d'obtenir une réflexion du rayonnement dans les parties masquées de telle sorte que le durcissement du vernis soit accéléré ou amorcé dans ces parties est prévu au moins sur une partie du côté extérieur du moyen d'application (1).

2. Utilisation selon la revendication 1, **caractérisée en ce qu'**elle prévoit un ruban adhésif doté d'un matériau de support (8) dont au moins une partie présente un revêtement adhésif (10), **en ce que** le ruban adhésif est enroulé dans la direction de l'axe longitudinal avec le côté pâte tourné vers l'extérieur, **en ce que** les deux bords longitudinaux sont superposés l'un à l'autre et collés pour ainsi former comme moyen d'application (1) un tube flexible (7) de ruban adhésif et **en ce que** le moyen (4) réfléchissant au moins partiellement le rayonnement est prévu sur le côté extérieur du tube flexible (7) en ruban adhésif.

3. Utilisation selon la revendication 2, **caractérisée en ce que** les deux bords longitudinaux du ruban adhésif sont superposés et collés ensemble de telle sorte que la partie superposée représente environ 5 % à environ 60 % de la largeur du ruban adhésif.

4. Utilisation selon l'une des revendications précédentes, **caractérisée en ce que** le moyen réfléchissant (4) est une surface métallique et/ou **en ce que** le moyen réfléchissant (4) est vaporisé sur la surface d'un profilé ou d'un tuyau flexible.

5. Utilisation selon la revendication 4, **caractérisée en ce que** le moyen réfléchissant (4) est une surface d'aluminium ou une surface d'or.

6. Utilisation selon l'une des revendications précédentes, **caractérisée en ce que** le moyen réfléchissant (4) est appliqué sur la surface d'un profilé ou d'un tuyau flexible sous la forme d'un ruban adhésif ou d'un film adhésif, **en ce que** le moyen réfléchissant (4) est temporairement recouvert d'une feuille de protection (11) et/ou **en ce que** la feuille de protection (11) est placée de manière libérable sur le moyen réfléchissant (4).

7. Utilisation selon la revendication 6, **caractérisée en ce que** le film de protection (11) présente une haute affinité vis-à-vis du vernis et/ou **en ce que** le film de protection (11) est placé de manière libérable sur le moyen réfléchissant (4) au moyen d'un agent adhésif.

8. Utilisation selon la revendication 7, **caractérisée en ce que** le film de protection (11) est placé de manière libérable sur le moyen réfléchissant (4) au moyen d'une couche d'adhésif.

9. Utilisation selon l'une des revendications précédentes, **caractérisée en ce que** le moyen d'application (1) présente un agent adhésif (3) qui présente de préférence la forme d'une couche d'adhésif et au moyen duquel il peut être immobilisé sur la surface (F) à vernir et de préférence **en ce qu'**un ou plusieurs rubans non revêtus d'adhésif sont prévus dans le sens de la longueur du moyen d'application (1).

10. Utilisation selon l'une des revendications précédentes, **caractérisée en ce qu'**un ruban non adhésif ou une section non adhésive sont formés par inactivation d'une pâte adhésive et/ou en la recouvrant par un matériau de couverture.

11. Utilisation selon l'une des revendications précédentes, **caractérisée en ce que** la section transversale du moyen d'application (1) est configurée de telle sorte que lorsque le moyen d'application est placé sur la surface (F) à vernir, il reste un espace libre entre cette surface et le côté extérieur du moyen d'application (1) qui forme le côté inférieur (U).

12. Utilisation selon la revendication 11, **caractérisée en ce que** le côté inférieur (U) est bombé vers l'extérieur ou vers l'intérieur ou **en ce que** le côté inférieur (U) est formé par une surface plane.

13. Utilisation selon l'une des revendications précédentes, **caractérisée en ce que** la section transversale du moyen d'application (1) est circulaire, en biseau ou elliptique et/ou **en ce que** la section transversale du moyen d'application (1) est formée d'un parallélogramme et de préférence d'un trapèze isocèle ou d'un losange.
